# EUROPEAN PATENT APPLICATION

(11) **EP 1 321 853 A2**
(43) Date of publication of application: **25.06.2003**
(21) Application number: 02024417.4
(22) Date of filing: 28.10.2002
(51) Int. Cl.: G06F 9/44

(54) **Dynamic component transfer based on resource negotiations between computer systems**

(30) Priority: 10.12.2001 US 337140 P
(71) Applicant: SAP Aktiengesellschaft, 69190 Walldorf (DE)
(72) Inventor: Gebhart, Alexander, 76669 Bad Schönborn (DE)

(57) **Abstract**

An application (301) on a client computer (300) connected to a computer network (200,300,501) automatically uses computer software components. The components (502) are deployed on a first server UDDI (501); the components (502) are registered (400) Web Service Description using Language in a second server Yellow Pages (200). The client computer (300) with the application (301) requests (401) a particular component by sending a functionality specification of the particular component to the second server (200). The second server (200) searches for register entries that match the functionality specification and returns (402) a list of matching components to the application. The matching component is executed (403/404) under control of the application.

## Description

### Field of the Invention

The present invention generally relates to data processing and, more particularly, relates to computer systems, programs, and methods for automatically using software components by an application on a client computer.

### Background of the Invention

The Internet is a worldwide network of cooperating computer networks. Connected to the Internet are thousands of individual computers, each with a variety of application programs.

The network computers often act in client/server configuration, for example, where a client computer downloads software components from a server computer. Today, the usage of components (located on server) by a client computer system via a network is well known. With Web Services, this technique has been enhanced by using a UDDI (Universal Description, Discovery and Integration) server ("yellow pages" server) to discover available components automatically. This means, that a client application has the ability to discover and use a remote component.

However, this paradigm has two significant drawbacks in terms of performance and offline availability. It is also known that, as a result of these drawbacks, the described mechanism cannot be used for certain scenarios. Usually, these are scenarios in which large amounts of data have to be transferred from or to the component (e.g. for logging/tracing), or scenarios in which network availability is not always guaranteed. There is a need to provide improved computer systems, programs, and methods.

### Brief Description of the Drawings

- FIG. 1: illustrates a computer system for implementing the present invention;
- FIG. 2: illustrates a computer system with client, component server, and yellow pages server configured in a first exemplary implementation of the invention;
- FIG. 3: illustrates the computer system of FIG. 2 configured in a second exemplary implementation of the invention;
- FIG. 4: illustrates a first XML structure used for the exemplary implementations; and
- FIG. 5: illustrates a second XML structure.

### Summary of the Invention

According to the present invention, entire components (or parts of components) are moved from a component server computer ("component server") to the client computer ("client") dynamically, i.e. by automatic negotiation between the client as component user and the server as component provider. Client and server negotiate directly or indirectly. The component server is supported by a "yellow page" server (e.g., implemented as UDDI server).

Resource information that is necessary to enable the component to be moved is available to the client and to the server (e.g. component size, the ability of the component to move as a whole or in parts). The exchange of such information via a protocol during a negotiation enables client and server to dynamically compose whole applications from local components (i.e. on the client) and from remote components (i.e. on the component server).

### Computer System

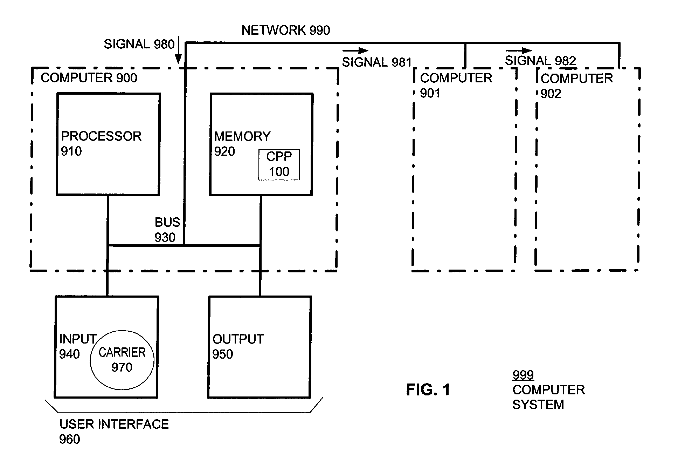

FIG. 1 illustrates a simplified block diagram of exemplary computer system 999 having a plurality of computers 900, 901, 902 (or even more).

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980.

In respect to computer 900, computer 901/902 is sometimes referred to as "remote computer", computer 901/902 is, for example, a server, a peer device or other common network node, and typically has many or all of the elements described relative to computer 900. Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 is elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick.

Optionally, memory 920 is distributed. Portions of memory 920 can be removable or non-removable. For reading from media and for writing in media, computer 900 uses well-known devices, for example, disk drives, or tape drives.

Memory 920 stores modules such as, for example, a basic input output system (BIOS), an operating system (OS), a program library, a compiler, an interpreter, and a text- processing tool. Modules are commercially available and can be installed on computer 900. For simplicity, these modules are not illustrated.

CPP 100 has program instructions and - optionally - data that cause processor 910 to execute method steps of the present invention. In other words, CPP 100 can control the operation of computer 900 and its interaction in network system 999 so that is operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer readable medium with computer readable program code to cause the computer to perform methods of the present invention. Further, signal 980 can also embody computer program product 100.

Having described CPP 100, carrier 970, and signal 980 in connection with computer 900 is convenient. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970.

Output device 950 presents instructions and data that have been processed. For example, this can be a monitor or a display, (cathode ray tube (CRT), flat panel display, liquid crystal display (LCD), speaker, printer, plotter, vibration alert device. Output device 950 can communicate with the user, but it can also communicate with further computers.

Input device 940 and output device 950 can be combined to a single device. Any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 includes gateways which are computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, electromagnetic, optical or wireless (radio) signals.

Networks are commonplace in offices, enterprise-wide computer networks, intranets and the Internet (e.g., world wide web). Network 990 can be a wired or a wireless network. To name a few network implementations, network 990 can be, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), Standard Generalized Markup Language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card. Computer and program are closely related. As used hereinafter, phrases, such as "the computer provides" and "the program provides", are convenient abbreviation to express actions by a computer that is controlled by a program.

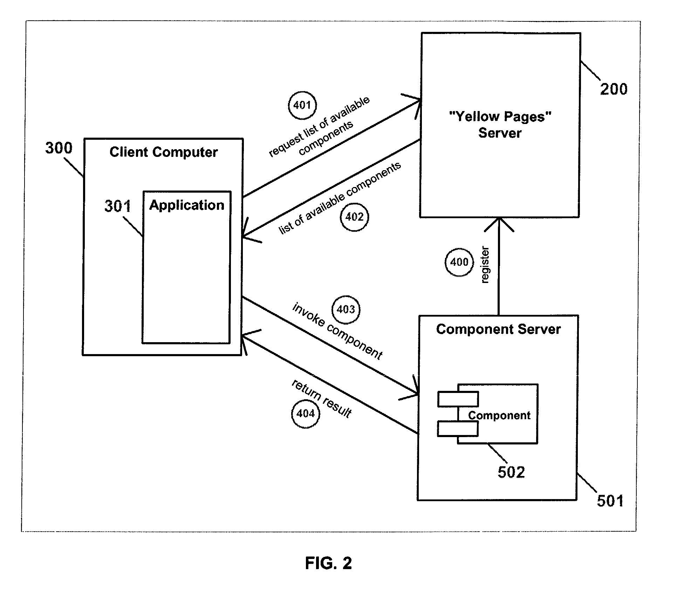

FIG. 2 illustrates a computer system with client 300, component server 501, and yellow page server 200 configured in a first exemplary implementation of the invention.

The process of discovering and using remote components can work as follows. First, components 502 are deployed to component server 501. Second, the components are registered 400 in server 200 ("yellow pages"). In the exemplary implementation, server 200 is a Universal Description, Discovery and Integration (UDDI) server.

Usually, the components are described inside server 200 via WSDL (Web Services Description Language). Typical information relates to the location of the components and how the components are invoked.

If application 301 on client 300 needs a particular component 502 on component server 501, application 301 sends 401 a request to server 200. The request specifies the required functionality of the component. Server 200 searches its registry entries for components that match the required functionality and sends 402 the result to client 300 (i.e. sending a list of matching available components).

Application 301 on client computer 300 accesses or invokes 403 the component 502 on component server 501 via the network. Access can take place via SOAP (Simple Object Access Protocol) or a similar technique. As implemented in the example, the component runs on the component server. When finished, the component returns 404 its result to the application on the client computer.

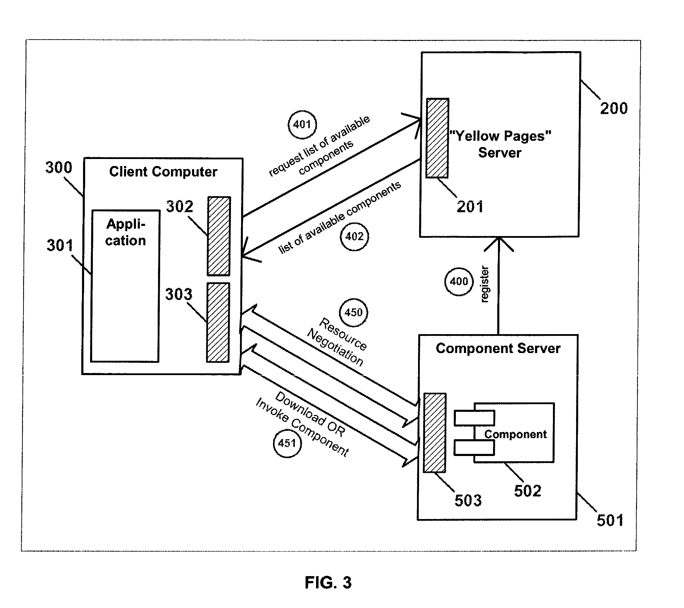

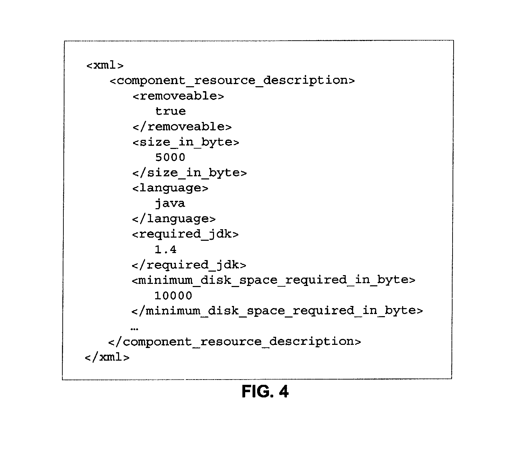

FIG. 3 illustrates the computer system of FIG. 2 configured in a second exemplary implementation of the invention. Similar as in the first implementation, application 301 on the client computer 300 receives 402 a list of possible components. Next, application 301 on client computer 300 starts negotiating 450 with component 502 on component server 501. Preferably, in negotiation 450, the component uses resource information about itself. This information is represented in a first XML structure (cf. FIG. 4) or in any other text structure.

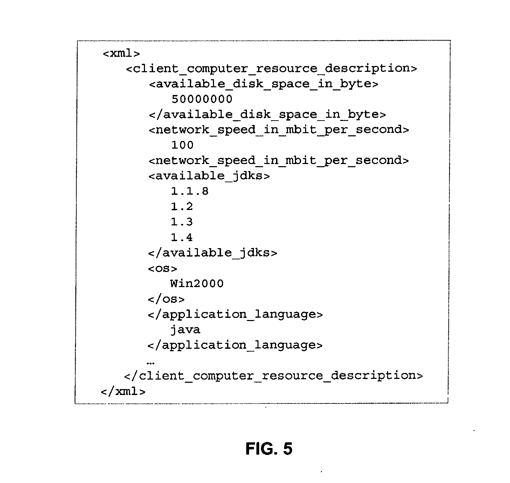

Preferably, application 301 has resource information about client computer 300. This information is retrieved by application 301 itself and is also represented in a second XML structure (cf. FIG. 5).

If some information is missing, application 301 stops negotiation 450 and uses the component as described in connection with FIG. 2.

Information is exchanged step-by-step in pieces via a defined protocol. Asking for specific information (by application) and stopping negotiation 450 immediately once all relevant information is retrieved speeds up negotiation 450. In an alternative, server 501 can pass all information from component 502 to client application 301 at once.

Application 301 decides automatically (based on the information provided in the XML structure) whether to run the component locally (i.e., client 300) or remotely (i.e. server 501). Application 301 defines which information is relevant for this decision. Some information is optional, like information about a potential performance increase when the component runs locally (on client 301) in comparison to run remotely (on server 501).

If the decision is to run the component 502 (or parts of the component) locally, the component is transferred via the network first, for example, (a) by passing the component code in the body part of a SOAP (Simple Object Access Protocol) message, with TCP/IP as underlying protocol, (b) by storing the component code in an XML document, or (c) by using a component transfer protocol. The component code is transferred in source code format or in any compiled format.

Once the code has arrived at client 300, the code is installed and runs automatically. For example, a component is written in Java programming language (source code format) and is transferred as byte code (compiled format): Application 301 stores the byte code locally (on client 300) and creates an object from that byte code dynamically as the main part of an object factory pattern. Once the object is created, the application can use the component by calling the corresponding methods of the object.

Still with FIG. 3, a third exemplary implementation adds agents. Instead of a direct negotiation between an application 301 and a component 502, small programs, so-called resource agents 503, 303 act on behalf of application 301 and/or component 502. This significantly reduces the additional code to write for both application and component developers.

Negotiation 450 takes place between the client-side agent 303 and the server-side agent 503. Once agents 303 and 503 agree to transfer a component and to run it on client 300, agents 303 and 503 provide transferal (to client 300) object creation (on client 300). From an application point of view, the process of getting a component is call to client-side agent 303 that delivers the object as a result. It is also possible to run only one agent on either side.

In a fourth exemplary implementation, server 200 (yellow pages) participates in negotiation 450. In this scenario, client application 301 and component 502 negotiate indirectly (without agents). The negotiation is done between server 200 and client 300, e.g. the corresponding application 301. During registration of the component 400, the data described in FIG. 4 is passed to server 200. When server 200 passes 402 a list of available components to the client 300, the information (cf. FIG. 4) is also passed to client 300.

Client 300 decides, based on this information, whether to run a component locally (on client 300) or remote (on servers 200 or 501). Client 300 request server 200 to select available components based on the resources of client 300. This offers new query possibilities, e.g. for server 200 to select only mobile components, if client 300 asked for this component type. Optionally, agent 302 controls the resource query at server 200 and the corresponding response 401/402. Preferences concerning the negotiation can be defined, such as to optimize performance, to optimize disk space, or to optimize network traffic.

In a fifth exemplary implementation, application 300 is a set of components that work together. One or more interacting components form an application. Application 301 is reduced to only an application stub, e.g. a program that knows what components are necessary to form a complete application. Such a stub uses described dynamic component transferal mechanism to dynamically build an application, consisting of both local and/or remote components. This provides a mechanism for dynamic application composition, based on available resources on client computer system 300. Instead of an application stub, the same can be achieved using agents on client 303 and/or server 503 side.

FIGS. 4-5 illustrate XML structures to provide information about the component (FIG. 4) and about the client (FIG. 5). Some information is present for both component and client (e.g., language). Providing complementary information is convenient (e.g., required space by component vs. available space by client).

For the exemplary implementations, both XML representations are based on well-known Document Type Descriptors (DTD), this ensuring that all required information is available a standardized format.

FIG. 4 illustrates the first XML structure. As mentioned above, the component uses resource information during negotiation 450, for example: a yes/no indication about removeability (e.g., from the server), an indication about the size (e.g., in byte), indication about the name of the programming language (e.g., Java) and the version (e.g., Java Development Kit JDK, version 1.4), an indication about minimum disk capacity that needed on client 300 (e.g., size in byte).

FIG. 5 illustrates the second XML structure. It informs about client 300 and has indications, for example about: available disk space (e.g., in byte), network speed (e.g., mega bit per second, determines time to transfer component), available JDK, operating system (of client 300), or application language.

Having described details of the invention in connection with exemplary implementations, the invention is now summarized as a method for automatically using computer software components by application 301 on client computer 300 that is connected to computer network 200, 300, 501. The method comprises deploying components 502 on first server 501; registering 400 components 502 in second server 200; requesting 401 a particular component by sending a functionality specification of the particular component from client computer 300 with application 301 to second server 200; searching in second server 200 for register entries that match the functionality specification; returning 402 a list of matching components to the application; and executing 403/404 a matching component under control of the application.

Preferably, registering 401 is performed with the first server being a Universal Description, Discovery and

Integration (UDDI) server. Preferably, registering is performed by describing the component in web service description language (WSDL). Preferably, registering is performed by describing the location of the component and describing the invocation of the component. Preferably, searching comprises to use a UDDI description in WSDL in second server 200. Preferably, returning 402 a list is followed by step performing a negotiation 450 between client and first server 501. Preferably, performing negotiation 450 comprises using resource information about the components. Preferably, using resource information comprises reading an text structure. Preferably, using resource information comprises reading the text structure as XML structure. Preferably, reading the XML structure comprises to read indications selected from: removeability, size, language, language version, disk capacity, processor speed, operating system, details of applications. Preferably, negotiation 450 has goals such as: to optimize performance, to optimize disk space use, to optimize network traffic, to decide on executing the identified component on the component server or on the client, to select components according to a predefined type. Preferably, performing negotation 450 comprises using at least one resource agent 502, 303. Preferably, using the resource agent comprises using a server-side agent 503 and using client-side agent 303. Preferably, using resource agents comprises controlling the executing step by the agents.

Preferably, controlling comprises transferring a component to the client by calling client-side agent 303 and creating an object on the client. Preferably, performing negotiation 450 comprises transferring resource information to second server 200 during step registering 400.

Preferably, executing the matching component comprises invoking 403 the matching component on first server 501 by application 301. Preferably, executing comprises returning 404 a result to application 301. Preferably, executing the matching component comprises accessing the matching component by a simple object access protocol (SOAP).

Preferably, executing comprises composing an application from a plurality of components from the component server. Preferably, composing the application comprises starting from an application stub on the client. Preferably, performing the method steps comprises to use the Internet network.

Also, the invention is defined as computer-readable storage medium having stored therein instructions capable of causing a computer to perform the method. The invention is also defined by computers that are client, first server and second server to perform the method.

### References

- 100: computer program product
- 200: yellow pages server
- 300: client computer
- 301: application
- 302: agent
- 303: resource agent
- 400: registering
- 401: requesting
- 402: sending list
- 403: accessing
- 404: return result
- 450: negotiation
- 451: downloading or invoking component
- 501: component server
- 502: component
- 503: resource agent
- 9xx: computer and computer parts

## Claims

1. A method for automatically using computer software components by an application (301) on a client computer (300) that is connected to a computer network (200, 300, 501), the method comprising:
deploying components (502) on a first server (501); registering (400) the components (502) in a second server (200);
requesting (401) a particular component by sending a functionality specification of the particular component from the client computer (300) with the application (301) to the second server (200);
searching in the second server (200) for register entries that match the functionality specification;
returning (402) a list of matching components to the application; and
executing (403/404) a matching component under control of the application.

2. The method of claim 1, wherein registering (401) is performed with the first server being a Universal Description, Discovery and Integration (UDDI) server.

3. The method of claim 2, wherein registering is performed by decribing the component in web service description language (WSDL).

4. The method of claim 3, wherein registering is performed by describing the location of the component and describing the invocation of the component.

5. The method of claim 1, wherein searching comprises to use a UDDI description in WSDL in the second server (200).

6. The method of claim 1, wherein step returning (402) a list is followed by step performing a negotiation (450) between client and first server (501).

7. The method of claim 6, wherein performing the negotation (450) comprises using resource information about the components.

8. The method of claim 7, wherein using resource information comprises reading an text structure.

9. The method of claim 8, wherein using resource information comprises reading the text structure as XML structure.

10. The method of claim 9, wherein reading the XML structure comprises to read indications selected from: removeability, size, language, language version, disk capacity, processor speed, operating system, details of applications.

11. The method of claim 6, wherein performing the negotation (450) comprises using at least one resource agent (502, 303).

12. The method of claim 11, wherein using the resource agent comprises using a server-side agent (503) and using a client-side agent (303).

13. The method of claim 12, wherein using resource agents comprises controlling the executing step by the agents.

14. The method of claim 13, wherein controlling comprises transferring a component to the client by calling the client-side agent (303) and to create an object on the client.

15. The method of claim 6, wherein performing the negotiation (450) comprises transferring resource information to the second server (200) during step registering (400).

16. The method of claim 1, wherein executing the matching component comprises invoking (403) the matching component on the first server (501) by the application (301).

17. The method of claim 16, wherein executing comprises returning (404) a result to the application (301).

18. The method of claim 1, wherein executing the matching component comprises accessing the matching component by a simple object access protocol (SOAP).

19. The method of claim 1, wherein executing comprises composing an application from a plurality of components from the component server.

20. The method of claim 19, wherein composing the application comprises starting from an application stub on the client.

21. A computer-readable storage medium having stored therein instructions capable of causing a computer to perform the method of any of claims 1-20.

22. A computer system with computers that are client, first server and second server to perform the method of any of claims 1-20.
